(19) Europäisches Patentamt
European Patent Office
Office européen des brevets

(11) **EP 1 379 857 B1**

(12) **EUROPÄISCHE PATENTSCHRIFT**

(45) Veröffentlichungstag und Bekanntmachung des Hinweises auf die Patenterteilung:
**09.12.2009 Patentblatt 2009/50**

(51) Int Cl.:
**G01N 21/47** *(2006.01)* **G01B 9/02** *(2006.01)*
**G01J 9/02** *(2006.01)*

(21) Anmeldenummer: **02735040.4**

(22) Anmeldetag: **16.04.2002**

(86) Internationale Anmeldenummer:
**PCT/DE2002/001404**

(87) Internationale Veröffentlichungsnummer:
**WO 2002/084263 (24.10.2002 Gazette 2002/43)**

(54) **INTERFEROMETRISCHE ANORDNUNG ZUR ERMITTLUNG DER LAUFZEIT DES LICHTS IN EINER PROBE**

INTERFEROMETRIC ARRANGEMENT FOR DETERMINING THE TRANSIT TIME OF LIGHT IN A SAMPLE

ENSEMBLE INTERFEROMETRIQUE PERMETTANT DE DETERMINER LE TEMPS DE PROPAGATION DE LA LUMIERE DANS UN ECHANTILLON

(84) Benannte Vertragsstaaten:
**AT BE CH CY DE DK ES FI FR GB GR IE IT LI LU MC NL PT SE TR**

(30) Priorität: **17.04.2001 DE 10118760**

(43) Veröffentlichungstag der Anmeldung:
**14.01.2004 Patentblatt 2004/03**

(73) Patentinhaber: **Medizinisches Laserzentrum Lübeck GmbH**
**D-23562 Lübeck (DE)**

(72) Erfinder:
- **KOCH, Peter**
  **23558 Lübeck (DE)**
- **WOSNITZA, Martin**
  **73450 Neresheim (DE)**

(74) Vertreter: **Biehl, Christian et al**
**Boehmert & Boehmert**
**Anwaltssozietät**
**Niemannsweg 133**
**24105 Kiel (DE)**

(56) Entgegenhaltungen:
**WO-A- 92/19930      DE-A- 19 514 860**
**DE-A- 19 929 406     DE-B-102004 033 187**

**US-A- 4 868 381      US-A- 5 172 185**

- **XP007904349**
- **XP002328240**
- **XP007904353**
- **XP007904351**
- **KOCH P; HÜTTMANN G; SCHLEIERMACHER H; EICHHOLZ J; KOCH E: "Linear OCT System with down conversion of the fringe pattern" PROCEEDINGS OF THE SPIE, Bd. 5316, 1. Januar 2004 (2004-01-01), Seiten 260-267, XP002328240**
- **HAUGER C; WORZ M; HELLMUTH T: "Interferometer for optical coherence tomography" APPLIED OPTICS, Bd. 42, Nr. 19, 1. Juli 2003 (2003-07-01), Seiten 3896-3902, XP007904351**
- **KOCH E; POPP A; BOLLER D; SCHLEIERMACHER H; KOCH P: "Fiber optic distance sensor with sub-nm axial resolution" PROCEEDINGS OF THE SPIE, Bd. 5861, 18. August 2005 (2005-08-18), Seiten 217-224, XP007904349**
- **HAUGER C; WORZ M; HELLMUTH T: "High speed low coherence interferometer for optical coherence tomography" PROCEEDINGS OF THE SPIE, Bd. 4619, 1. Juni 2002 (2002-06-01), Seiten 1-9, XP007904353**
- **LANKENAU E, KOCH P, ENGELHARDT R: "An Imaging System for Low Coherence Tomography" OSA TRENDS IN OPTICS AND PHOTONICS, Bd. 2, 18. März 1996 (1996-03-18), Seiten 247-249, XP009097613**

EP 1 379 857 B1

**Beschreibung**

Die Erfindung betrifft eine interferometrische Anordnung zur Ermittlung der Laufzeitverteilung des Lichts in der Probe gemäß den im Oberbegriff des Anspruchs 1 aufgeführten Merkmalen.

Verfahren zur Ermittlung der Laufzeitverteilung und entsprechende Vorrichtungen zählen zum Stand der Technik und sind beispielsweise aus DE 199 29 406 A1 bekannt. Sie werden typischerweise bei der optischen Kohärenztomografie (OCT) eingesetzt. Dieses Verfahren arbeitet im Bereich kurzer Wellenlängen, insbesondere im nahen Infrarotspektrum des Lichts, und wird zur mikroskopischen Auflösung von Oberflächenstrukturen eingesetzt.

Grundgedanke der bekannten Vorrichtung ist es, die Auswertung zur Ermittlung der Laufzeitverteilung des Lichts im Probenzweig eines Interferometers räumlich vorzunehmen, nämlich anhand der räumlichen Intensitätsverteilung des überlagerten Lichts.

Diese Vorrichtungen arbeiten ohne bewegte Teile, sie benötigen also nicht den sonst üblichen Phasenmodulator und die damit verbundenen konstruktiven, kostenmäßigen und systembedingten Nachteile. Dabei tritt das aus dem Probenzweig und dem Referenzzweig des Interferometers zurückkehrende Licht an zwei verschiedenen Orten in die Auswerteeinheit ein, in der es räumlich überlagert wird, wobei anhand der räumlichen Intensitätsverteilung in diesem überlagerten Bereich die Laufzeitverteilung des Lichts im Probenzweig bestimmt wird.

Wenn, was erstrebenswert ist, der vorrichtungsmäßige Aufbau des Interferometers so gestaltet ist, dass das Licht im Wesentlichen in Lichtwellenleitern geführt ist, dann ergeben sich die zwei Punktförmigen Austrittsorte nach Austritt aus der Faser (Monomodefaser) von selbst, das heißt, das Ende des Lichtwellenleiters bildet zwei virtuelle Punktlichtquellen, die lediglich so anzuordnen sind, dass sich ein Überlagerungsbereich ergibt.

Um die Auswertung zu vereinfachen, wird den Ausgängen des Lichtwellenleiters häufig eine Zylinderlinse nachgeschaltet, welche den jeweils kegelförmigen Lichtaustritt in einen fächerförmigen und im Wesentlichen in einer Ebene liegenden bündeln, in der dann eine Fotodetektorzeile als Detektionseinrichtung angeordnet ist. Für das OCT Verfahren wird mit einer breitbandigen Lichtquelle kurzer Kohärenzlänge gearbeitet. Das Licht dieser Quelle wird in einer als Michelsoninterferometer bekannten Weise in einen ersten Strahlteil aufgeteilt, der eine konstante Strecke bis zur Detektionseinrichtung zurücklegt - dieser Teil des Interferometers wird als Referenzzweig bezeichnet - und in einen zweiten Teil, der auf die zu untersuchende Probe einstrahlt, von dieser reflektiert oder zurückgestreut wird, so dass sich eine je nach Tiefe der Reflexionsschicht veränderte Laufstrecke und damit auch Laufzeit des Lichtes zur Detektionseinrichtung ergibt. Beide Anteile werden an zwei räumlich voneinander entfernten Orten zur Bildung einer Gaußschen Strahltaille geführt und überlagert. Dabei ergibt sich je nach Laufzeitverteilung eine unterschiedliche Intensitätsverteilung über die Detektionsachse. Dabei bildet sich typischerweise eine Gaußsche Intensitätsverteilung längs des Überlagerungsbereichs des Lichts aus.

Eine vergleichbare interferometrische Anordnung ist aus DE 197 32 619 C2 bekannt. Dort sind strukturelle Auslegungen von optischen Detektoreinrichtungen vergleichend beschrieben. Allerdings wird dort im Meßkanal, der dem vorgenannten Probenzweig entspricht, nicht das von der Probe reflektierte Licht, sondern das Licht, was die Probe durchstrahlt hat zur Überlagerung mit dem Licht des Referenzzweiges herangezogen. Eine solche Anordnung ist beispielsweise zur Bestimmung von Brechzahlen unterschiedlicher Substanzen zweckmäßig.

Weiter ist aus der WO-92/19920 A1 bekannte Aufbau zu würdigen. Der dortigen Beschreibung kann aber nicht entnommen werden, dass das von der Probe zurückkehrende Licht in zwei Anteile aufgespalten würde. Vielmehr scheint es in den Optokopplern lediglich mit dem zurückgespiegelten Licht aus dem Referenzarm des Interferometers überlagert zu werden. Ferner werden unterschiedliche Polarisationsrichtungen des Interferenzlichts auf verschiedene Detektoren gelenkt. Ansonsten entsteht das letztlich auswertbare Interferenzsignal offenbar an jedem einzelnen Punktdetektor als Funktion der Zeit, wie es auch sein muss, wenn die Länge des Referenzarms moduliert wird.

In einem Aufsatz E. Lankenau et al. "An imaging system for Low Coherence Tomography", OSA Trends in Optics and Photonics an Advances in Optical Imaging and Photon Migration 18-20. 3. 1996, vol. 2, pp. 247-249, XP-009097613 ist ein OCT set-up beschrieben, bei dem 'off-axis twice scattered photons' untersucht werden jedoch gerade keine Strukturen innerhalb der Scatter-Proben gemessen werden können.

Die DE 199 29 406 A1 schließlich nutzt nicht die Tatsache, dass ein Interferometer keinen physikalischen Referenzarm benötigt. Das Probenlicht kann ggf. mit sich selbst zur Interferenz gebracht werden und dabei auswertbare Streifenmuster hervorbringen.

Die vorbekannten Anordnungen weisen Nachteile auf, die mittels der vorliegenden Erfindung beseitigt werden sollen.

a) In den bisher verwendeten Vorrichtungen werden das Referenzlicht und das Probenlicht auf unterschiedlichen Wegen zu der Auswerteeinrichtung geführt. Falls die Lichtwellenleiter, in denen das Licht geführt wird unterschiedlichen Umwelteinflüssen, wie mechanischen Spannungen oder Temperaturen ausgesetzt werden, ändern sich die Laufstrecken von Proben- und Referenzlicht ebenfalls in unterschiedlicher Weise. Derartige differentielle Änderungen können von dem Detektor nicht von echten Bewegungen der Probe unterschieden werden und verfälschen daher das Messergebniss.

b) Unterschiedliche Spannungen auf den Lichtwellenleitern, in denen das Proben und Referenzlicht geführt wird, führen zu unterschiedlichen spannunginduzierten Doppelbrechungen. Dieser Effekt verschlechtert, wenn er statisch ist, lediglich das Auflösungsvermögen der Vorrichtung. Falls sich die Spannungszustände der Fasern dynamisch ändern kommt es sogar zu Schwankungen der Signalhöhen und Positionen während der Messung. Solche dynamischen Änderungen sind unvermeidlich, wenn die Probenfaser bewegt wird, was bei fast allen medizinischen Anwendungen der Technik der Fall ist.

c) Systembedingt sind die bekannten Vorrichtungen auf die Verwendung eines Referenzarmes angewiesen. Messungen der Laufzeitverteilungen in der Probe erfolgen daher immer relativ zu der Laufzeit im Referenzarm. Häufig ist man allerdings gar nicht an der Position der Probe relativ zu der Referenzlänge interessiert, sondern möchte nur spezifische Strukturen in der Probe untersuchen. In diesen Fällen weisen die bekannten Vorrichtungen den Nachteil auf, dass jegliche Bewegungen der Probe das Messergebniss verschlechtern.

d) Bei den klassischen Michelsoninterferometer Anordnungen verlässt das Referenzlicht die Faser um von einem Spiegel reflektiert wieder in diese zurückgeführt zu werden. Diese Anordnungen haben den Nachteil, das es zu Verlusten an den Spiegeln und bei der erneuten Einkopplung in die Faser kommt.

e) Wie oben bereits beschrieben addieren sich in der Beobachtungsebene die beiden gaußförmigen Intensitätsverteilungen, die sich nach dem Austritt von Proben- und Referenzlicht aus den Faserenden ergeben. Die verwendeten Bildsensoren weisen erhebliche Empfindlichkeitsunterschiede zwischen den verschiedenen Pixeln auf. Diese Fehler und die Fehler bei der Ermittlung der Modulationsamplituden werden typischerweise dadurch ausgeglichen, daß die gewonnen Messdaten mit Kalibrierungswerten multipliziert werden. Das ist allerdings nur noch bedingt möglich, wenn sich die Untergrundintensitäten während der Messung ändern, z.B. weil in der Probe gerade eine Stelle mit besonders hoher Reflektivität vermessen wird.

Vor diesem Hintergrund liegt der vorliegenden Erfindung die Aufgabe zugrunde, eine gattungsgemäße interferometrische Anordnung so auszubilden, dass die vorgenannten Probleme vermieden oder zumindest vermindert werden.

Diese Aufgabe wird gemäß der Erfindung durch die in Anspruch 1 angegebenen Merkmale gelöst. Vorteilhafte Ausgestaltungen der Erfindung sind in den Unteransprüchen der nachfolgenden Beschreibung sowie der Zeichnung angegeben.

Grundgedanke der vorliegenden Erfindung ist es, das von der Probe, sei es durch Reflexion oder durch Durchstrahlung, zurückkehrende Licht quasi mit sich selbst zu überlagern, in dem das von der Probe zurückkehrende Licht in zwei Anteile aufgespalten wird, die dann überlagert und einer optischen Detektionseinrichtung zugeführt sind. Dieser grundlegend neue Gedanke, der mit der Erfindung realisiert wurde besteht also darin, das Licht welches aus der Probe zurückgestreut wurde, bereits am Probenort mit Licht aus einer optionalen Referenzebene zusammenzuführen, so dass beide Anteile gemeinsam in einem einzigen Lichtwellenleiter zu der Auswerteeinheit geführt werden können. Dort werden das in der Faser geführte Licht in zwei Anteile aufgeteilt, die anschließend so aus den Fasern austreten. Die Austrittsorte bzw. Faserenden werden so angeordnet, dass sich die beiden entstehenden Lichtkegel überlappen. In dem Überlappungsbereich kommt es zu Interferenzerscheinungen, die zur Ermittlung der Laufzeitverteilung in der Probe verwendet werden.

Die Interferenzerscheinungen sind im allgemeinen Fall von recht komplexer Natur. Die Amplituden der Interferenzen setzen sich aus drei unterschiedlichen Thermen zusammen, nämlich den Interferenzen des Referenzlichtes mit sich selbst, des Probenlichtes mit sich selbst und des Probenlichts mit dem Referenzlicht. Alle drei Anteile sind symetrisch um $\Delta z=0$ ( $\Delta z$ entspricht der Weglängendifferenz zwischen Proben und Referenzarm.)

An der Stelle $\Delta z=0$ befindet sich ein hoher gaußförmiger Anteil. Er entspricht der Autokorrelierten des Referenzlichts. Wenn in der Referenz nur eine Weglänge zugelassen wird entspricht dieser Anteil der Kohärenzfunktion der Lichtquelle selbst.

Der zweite Anteil ist die Autokorrelierte aus den Laufzeitverteilungen in der Probe. Falls keine Referenziniensität existiert wird nur dieser Anteil gemessen. Die Position dieses Anteils im Interferogramm ist daher auch nicht von der absoluten Position der Probe abhängig, was für einige Anwendung sehr vorteilhaft sein kann. Dieser Anteil ist in den Anordnungen nach dem Stand der Technik gar nicht messbar.

Der dritte Anteil entspricht der Kreuzkorrelation zwischen dem Probenlicht und dem Referenzlicht. Dieser Anteil taucht symmetrisch auf beiden Seiten des Interferogramms auf. Es handelt sich um den einzigen Anteil, der mit den Verfahren nach dem Stand der Technik messbar ist.

Der vorrichtungsmäßige Aufbau der erfindungsgemäßen interferometrischen Anordnung kann je nach Anwendungsschwerpunkt unterschiedlich sein.

Um große Entfernungen zwischen Probe und Detektionseinrichtung zu überwinden und insbesondere Wärmeeinflüsse weitgehend auszuschalten, ist eine Anordnung von Vorteil, bei der der Beleuchtungsarm zwar ebenfalls in einen Strahlteiler, vorzugsweise einen (ersten) Faserkoppler, mündet, der das Licht in den Probenzweig und in den Referenzzweig anteilig leitet, die jedoch so ausgebildet sind, dass das Licht sowohl im Proben- als auch im Referenzzweig reflektiert wird, zum Strahlteiler zurückgelangt und von dort über einen gemeinsamen Lichtwellenleiter zu einem weiteren (zweiten) Strahlteiler, der weit entfernt angeordnet sein kann, geführt ist. Dieser zweite Strahlteiler speist zwei Lichtwellenleiter mit jeweils einem Austritt, die der Detektionseinrichtung zugeordnet sind. In dieser Anordnung werden also Referenz- und Probenzweig, anders als im Stand der Technik in einem gemeinsamen Lichtwellenleiter, zusammengeführt, wodurch die Überbrückung größerer Entfernungen möglich ist und die Vorrichtung zumindest in diesem Bereich weitgehend unempfindlich gegen Wärmeeinflüsse ist, da sich sowohl beim Ausdehnen als auch beim Kontrahieren die Längen von Referenz- und Probenzweig in gleicher Weise ändern und damit das Messergebnis nicht beeinflussen.

Dabei kann die Anordnung so sein, dass der Referenzzweig einen Spiegel aufweist oder das entsprechende Ende des Lichtwellenleiters als Reflexionsfläche genutzt wird, um das Licht im Referenzzweig zum Strahlteiler zurückzuleiten. Im Probenzweig erfolgt dies durch die Probe.

Alternativ kann das Licht auch in diesem Bereich im Referenz- und Probenzweig gemeinsam geführt werden, wenn entweder für den Referenzzweig ein halbdurchlässiger Spiegel im Bereich vor der Probe angeordnet ist oder aber die Probe selbst mindestens zwei unterschiedliche Flächen zur Reflexion aufweist, wobei dann das an einer dieser Flächen reflektierte Licht als Licht des Referenzzweigs dient.

Um die Lichtintensität innerhalb der Anordnung weiter zu steigern, wird der erste Strahlleiter vorzugsweise durch einen Zirkulator gebildet, der das Licht auf die Probe richtet und das von der Probe reflektierte Licht aufnimmt und in Richtung zur Detektionseinrichtung weiterleitet.

Zweckmäßigerweise wird im Referenz-und/oder auch im Probenzweig eine Anordnung zum Kalibrieren, d. h. zum ggf. erforderlichen Ausgleichen unterschiedlicher Längen vorgesehen. Hierzu kann beispielsweise ein statischer Phasenmodulator eingesetzt werden, der keinen oder zumindest keinen dynamischen Antrieb aufweist.

Der Aufbau der erfindungsgemäßen Anordnung kann so gestaltet sein, dass mit Ausnahme eines kleinen Bereichs zwischen einem Lichtwellenleiteraus- und -eintritt des Probenzweigs und der Probe das Licht in der gesamten Anordnung geschlossen und im Wesentlichen ausschließlich in Lichtwellenleitern geführt wird, so dass die Anordnung weitgehend unempfindlich gegen Umgebungseinflüsse, insbesondere Staub und Erschütterungen, ist.

Darüber hinaus können zusätzlich oder auch alternativ im Referenzzweig Mittel zum Verringern der Lichtintensität vorgesehen sein, beispielsweise Graufilter oder dergleichen, um die Intensität des Lichts im Referenzzweig zumindest grob an die des Probenzweigs anzugleichen.

Es ist günstig, die Intensität des überlagerten Lichts nicht flächenmäßig, sondern zeilenweise zu erfassen und hierzu, beispielsweise mittels einer Zylinderlinse, die austretenden Lichtstrahlen entsprechend flach zu bündeln. Als Fotodetektorzeile kann grundsätzlich eine beliebige Reihe lichtempfindlicher Zellen eingesetzt werden, wie beispielsweise eine Fotodiodenzeile, eine CCD-Zeile oder dergleichen. Besonders günstig sowohl hinsichtlich der Kosten als auch hinsichtlich des Messfehlers und der Messdynamik ist die Verwendung eines MOS-Zeilensensors, wobei der Abstand der Detektionszellen vorzugsweise so gewählt wird, dass der Mittelpunktsabstand einem Drittel der mittleren Wellenlänge des Lichts entspricht. Dann ist eine zuverlässige Detektion ohne Kenntnis der Phasenlage des Lichts bzw. der Intensitätsverteilung möglich. Gegebenenfalls kann der Abstand der Detektorzellen weiter vergrößert werden, wenn Informationen über die Phasenlage berücksichtigt werden oder die Auflösung verringert wird (Undersampling).

Das analoge Ausgangssignal der Detektionseinrichtung, insbesondere des MOS-Zeilensensors, kann sowohl analog als auch digital oder auch analog-digital weiterverarbeitet werden. Als besonders günstig hat es sich erwiesen, das Ausgangssignal zunächst einmal analog weiterzuverarbeiten und innerhalb der Auswerteeinrichtung um einen vorgegebenen Wert zu reduzieren und nachfolgend gegebenenfalls zu spreizen. Wenn dann ein Analog-/Digitalwandler nachgeschaltet wird, kann dieser eine geringere Messauflösung haben, ohne die Genauigkeit des Meßergebnisses zu beinflußen. Hierbei ist jedoch sorgfältig darauf zu achten, dass das Ausgangssignal der Detekionseinrichtung stets über dem Wert liegt, um den das Signal innerhalb der Auswerteeinrichtung bei der analogen Bearbeitung reduziert wird.

Die Erfindung ist nachfolgend anhand von in der Zeichnung dargestellten Ausführungsbeispielen näher erläutert. Es zeigen

Fig. 1      in schematischer Darstellung die Interferenz am Young'schen Doppelspalt,

Fig. 2      eine Intensitätsverteilung, wie sie mit einem MOS-Zeilensen- sor typischerweise gemessen wird,

Fig. 3      in schematischer Seitenansicht den Strahlverlauf zwischen Lichtwellenleiter und Detektionseinrichtung,

Fig. 4      den Strahlverlauf gemäß Fig. 3 in Draufsicht,

Fig. 5      in schematischer Darstellung ein erstes Ausführungsbeispiel der Erfindung,

Fig. 6      in schematischer Darstellung ein zweites Ausführungsbei- spiel der Erfindung,

Fig. 7      in schematischer Darstellung ein drittes Ausführungsbeispiel der Erfindung,

Fig. 8      in schematischer Darstellung ein viertes Ausführungsbeispiel der Erfindung,

Fig. 9      ein Blockdiagramm der digitalen Signalverarbeitung in der Auswerteeinrichtung und

Fig. 10     -ein Blockdiagramm einer analogen Signalverarbeitung der Auswerteeinrichtung.

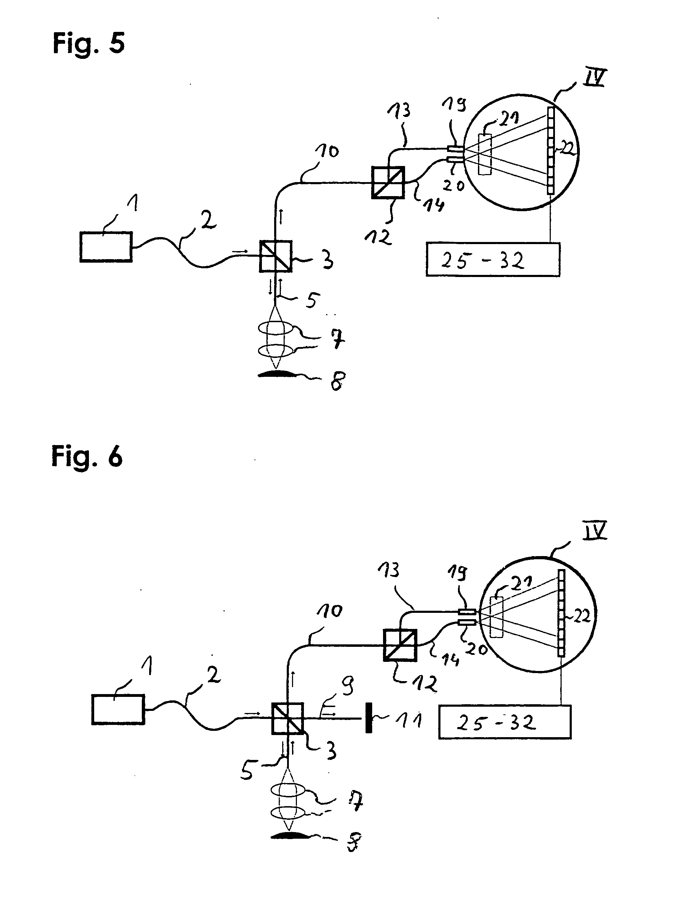

Den anhand der Figuren 5 bis 8 dargestellten Ausführungsbeispielen, welche den vorrichtungsmäßigen Aufbau darstellen, gemeinsam ist eine breitbandige Lichtquelle 1 mit kurzer Kohärenzlänge, die in eine Interferometeranordnung einspeist. Das von der Lichtquelle 1 ausgehende Licht gelangt über einen Lichtwellenleiter 2 zu einem ersten Strahlteiler 3 in Form eines Faserkopplers. Als Lichtwellenleiter dienen dabei, wie bei solchen Anwendungen üblich, Single-Mode-Fasern.

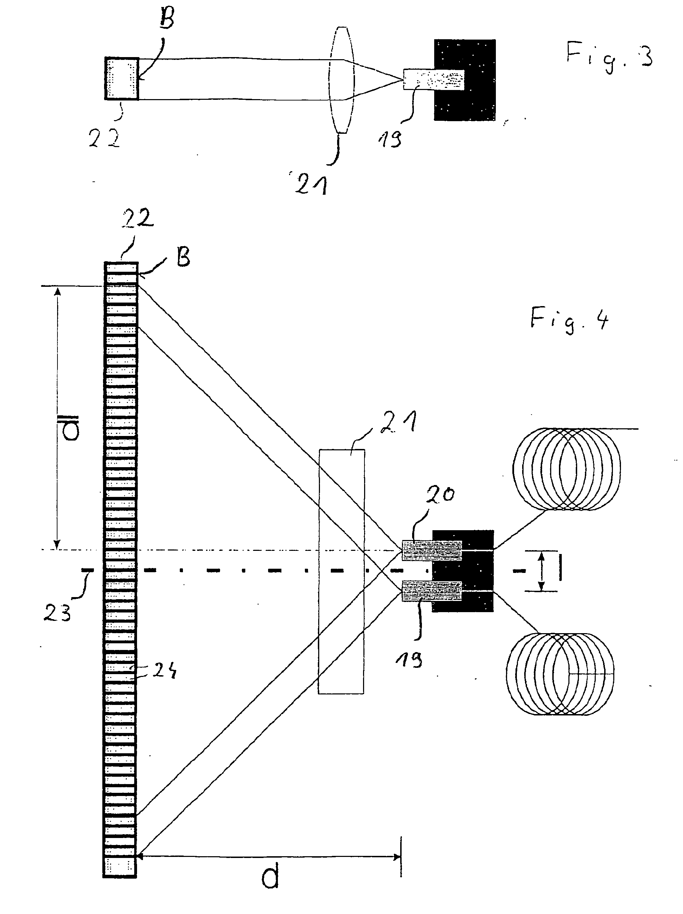

Das aus dem ausgangsseitigen Lichtwellenleiter 5 des Faserkopplers 3 austretende Licht ist über eine Optik 7 auf eine zu untersuchende Probe 8 fokussiert. Das aus dem Lichtwellenleiter 5 austretende Licht gelangt durch die Optik 7 fokussiert auf die Probe 8, wo es zumindest teilweise reflektiert wird, durch die Optik 7 und wieder in den Lichtwellenleiter 5 gelangt. Von dort gelangt es über einen parallel zum Lichtwellenleiter 2 eingangsseitig vom Strahlteiler 3 abgehenden Lichtwellenleiter 10 zu einem zweiten Strahlteiler 12, ebenfalls in Form eines Faserkopplers. Bei dieser Anordnung bleibt das zweite ausgangsseitige Faserende des Faserkopplers 3 ungenutzt, ebenso wie das zweite eingangsseitige des Faserkopplers 12. Die beiden ausgangsseitigen Enden 19, 20 der Lichtwellenleiter 13, 14 des Faserkopplers 12 sind in einer optischen Anordnung IV geführt, wie Sie weiter unten anhand der Figuren 3 und 4 noch im Einzlenen beschrieben ist. Bei der vorbeschriebnen interferometischen Anordnung gibt es keinen eigentlichen Referenzzweig, wie es bei vergleichbaren Anordnungen aus dem Stand der Technik bekannt ist, vielmehr wird hier eine Reflexionsebene der Probe als Referenzebene genutzt, so dass Proben und Referenzzweig denselben optischen Weg durchlaufen, abgesehen von den unterschiedlichen Weglängen in der Probe.

Bei der Anordnung gemäß Fig. 6 gelangt in gleicher Weise wie vorbeschrieben Licht einer breitbandigen Lichtquelle 1, beispielsweise einer Lumineszenzdiode, mit kurzer Kohärenzlänge durch den Lichtwellenleiter 2 zu einem Strahlteiler 3 in Form eines Faserkopplers. Das Licht wird dabei in einen Lichtwellenleiter 9 sowie einen Lichtwellenleiter 5 geleitet. Der Lichtwellenleiter 5 bildet den Teil des Probenzweigs, an dem das Licht durch eine Optik 7 austritt, auf die Probe 8 fokussiert, dort reflektiert und in den Lichtwellenleiter 5 zurückgeworfen wird. Der Lichtwellenleiter 9 bildet Teil des Referenzzweigs. Das hindurch geleitete Licht wird am Ende mittels eines Spiegels 11 oder einer verspiegelten Endfläche reflektiert und gelangt wiederum zum Strahlteiler 3. Ein Teil des reflektierten Lichts aus Proben- und Referenzzweig gelangt ungenutzt in den Lichtwellenleiter 2, der andere Teil hingegen in den ebenfalls an der Seite der Lichtquelle 1 am Faserkoppler 3 anschließenden Lichtwellenleiter 10, der an einen zweiten Strahlteiler 12 ebenfalls in Form eines Faserkopplers anschließt. Der Lichtwellenleiter 10 zwischen den Strahlteilern 3 und 12. ist sowohl Teil des Proben- als auch Teil des Referenzzweigs, der in diesem Bereich der Vorrichtung zusammengeführt ist. Der zweite Strahlteiler 12 teilt das in dem Lichtwellenleiter 10 geführte Licht in zwei Strahlteile auf, die in Lichtwellenleitern 13 und 14 geführt sind, deren Enden in einer Anordnung IV liegen, die weiter unten im Einzelnen beschrieben ist.

Für die Auswertung erstrebenswert ist es, sowohl im Proben- als auch im Referenzzweig möglichst gleichgroße Lichtintensitäten zu haben. Da bei der Ausführungsvariante nach Figur 6 das Referenzlicht am Spiegel 11 nahezu vollständig reflektiert wird, ist es zweckmäßig im Bereich des Lichtwellenleiters 9 oder zwischen diesem und dem Spiegel einschwenkbare Graufilter vorzusehen, welche die Lichtintensität innerhalb dieses Arms herabsetzen können, um auf ein etwa gleiches Intensitätsniveau wie im Probenzweig zu kommen.

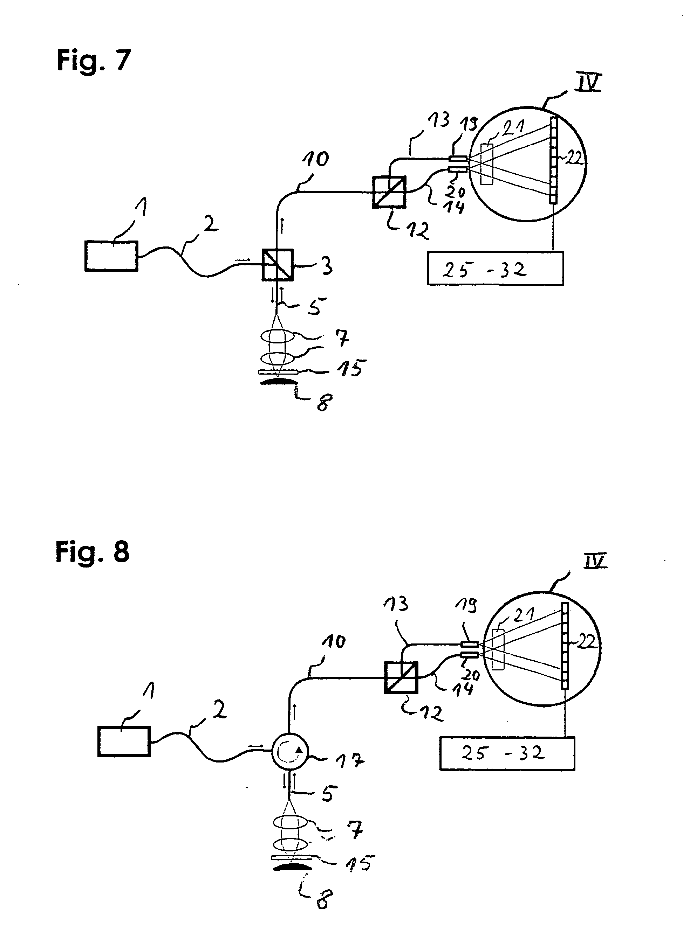

Die Anordnung gemäß Fig. 7 unterscheidet sich von der vorbeschriebenen dadurch, dass zwischen der Optik 7 und der Probe 8 ein halbdurchlässiger Spiegel 15 angeordnet ist, so dass ein Teil des Lichts an diesem reflektiert wird und ein anderer Teil an der Probe 8, wodurch sich Laufzeitunterschiede ergeben, die am Ende innerhalb der Anordnung IV ausgewertet werden können. Das am Spiegel 15 reflektierte Licht bildet hier den Referenzzweig, wohingegen das an der Probe 8 reflektierte den Probenzweig bildet, die über den gesamten Lichtwellenleiterweg überlagert sind.

Die Ausführung gemäß Fig. 8 entspricht in ihrem wesentlichen Aufbau der gemäß Fig. 7, mit dem Unterschied, dass der erste Strahlteiler 3 durch einen Zirkulator 17 ersetzt ist. Das aus der Lichtquelle 1 austretende Licht gelangt in der Ausführung gemäß Fig. 8 ebenfalls über einen Lichtwellenleiter 2 in den Zirkulator 17, es tritt über den Lichtwellenleiter 5 zur Probe 8 hin aus, wo es in gleicher Weise mittels eines Objektivs 17 fokussiert wird, einen teildurchlässigen Spiegel 15 durchläuft um schließlich auf der Probe aufzutreffen. Das vom Spiegel 15 reflektierte Licht, das den Referenzzweig bildet sowie das von der Probe 8 reflektierte Licht, das den Probenzweig bildet, gelangt wiederum durch das Objektiv 7 in den Lichtwellenleiter 5 und von dort in den Zirkulator, der dieses überlagerte Licht einem Lichtwellenleiter 10 zuführt, der wie bei allen vorbeschriebenen Ausführungen zum zweiten Strahlteiler 12 und der Auswerteranordnung gemäß IV führt. Bei dieser Anordnung ist aufgrund des Zirkulators eine verlustärmere Lichtführung gegeben.

Darüber hinaus weisen die vorbeschriebenen Vorrichtungen, gemäß Fig. 6 vorzugsweise im Berich des Lichtwellenleiters 9 (Referenzzweig) ein Kalibrierglied auf, welches es ermöglicht, die Laufstrecke des Lichts im Referenzzweig an die im Probenzweig anzupassen bzw. die Laufstrecke im Referenz- und Probenzweig zu verändern. Hierzu kann beispielsweise ein Phasenmodulator eingesetzt werden.

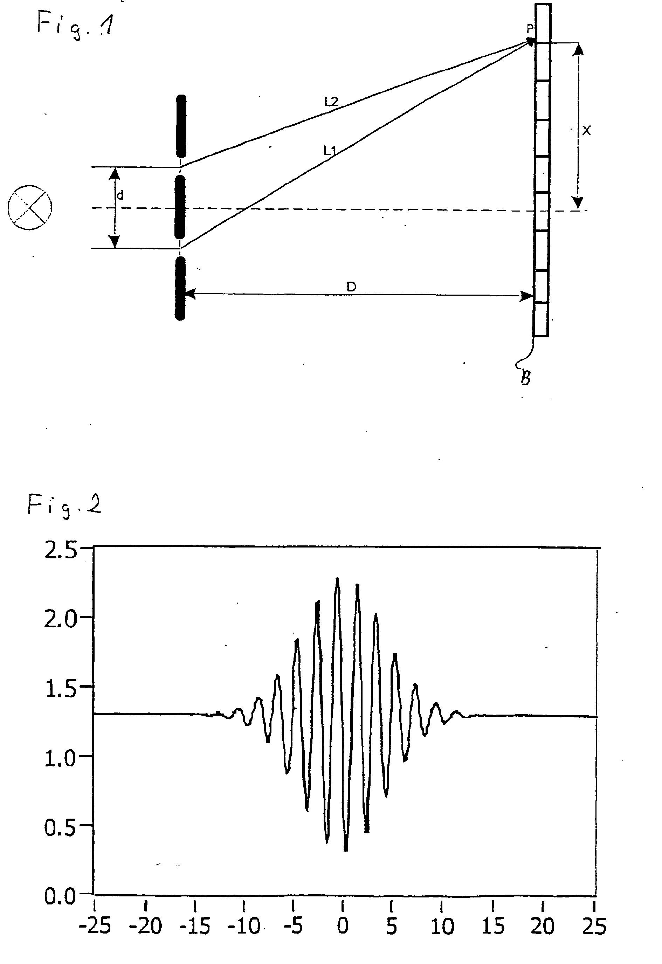

Um die Laufstreckenunterschiede des Lichts zwischen Referenz- und Probenzweig zu ermitteln, werden mittels der Anordnung IV Interferenzen erzeugt, die zu Intensitätsunterschieden des Lichts über der Fläche führen, die räumlich erfasst werden, um auf diese Weise die Laufzeitverteilung und damit insbesondere die Laufstreckenunterschiede zwischen Proben- und Referenzzweig zu ermitteln. Ausgangspunkt der Anordnung IV sind die Zusammenhänge, die sich aus den in der Literatur als Young'scher Doppelspaltversuch bekannten Phänomenen ergeben. Wenn, wie anhand von Fig. 1 dargestellt, zwei kohärente Lichtquellen in einem Abstand $d$ voneinander so positioniert werden, dass beide den Abstand $D$ von einer Beobachtungsebene B einnehmen, stellen sich auf dieser Beobachtungsebene B Interferenzerscheinungen ein. Wenn der Abstand $D$ sehr viel größer als der Abstand $d$ ist, kann die Weglängendifferenz zwischen den beiden Lichtquellen folgendermaßen beschrieben werden:

$$\delta = L_1 - L_2 = \Delta L = \frac{d}{D} \cdot x$$

wobei die beiden Lichtquellen entsprechend dem Doppelspaltversuch durch eine Lichtquelle mit einem nachfolgend angeordneten Doppelspalt im Abstand $d$ ersetzt sind. Dabei stellt die Weglänge $L_1$ die Weglänge zwischen dem ersten Spalt bis zu einem Punkt P auf der Beobachtungsebene und $L_2$ die Weglänge von dem zweiten Spalt zu diesem Punkt P dar, wobei x der Abstand des Punktes P zu der Mittelachse zwischen den beiden Spalten darstellt.

Zu konstruktiver Interferenz kommt es dabei an allen Punkten $x_m$, bei denen der Weglängenunterschied zwischen den Spalten gerade ein ganzzahliges Vielfaches der Wellenlänge des Lichts ist:

$$x_m = \frac{d}{D} \cdot m \cdot \lambda$$

Diesen Effekt nutzt die Anordnung IV aus, bei der anstelle des Doppelspalts die Ausgänge der Lichtwellenleiter 13 und 14 dienen, die im Abstand $d$ so zueinander angeordnet sind, dass sich der vorbeschriebene Interferenzeffekt einstellt. Dabei stellen die hier eingesetzten Monomode-Lichtwellenleiter Gauß'sche Strahltaillen dar. Das heißt, dass das aus den Faserenden austretende Licht in lateraler Richtung ein Gaußförmiges Intensitätsprofil aufweist. Außerdem weitet sich das Lichtbündel mit zunehmendem Abstand von der Faser mit der numerischen Apertur des Lichtwellenleiters auf. Die beiden Faserenden sind so platziert, dass es zu einer weitgehenden Überlappung der entstehenden Strahlkegel kommt. In diesem Überlappungsbereich interferieren die kohärenten Anteile miteinander. Die sich aufgrund der Interferenzerscheinungen einstellenden unterschiedlichen Lichtintensitäten über die Betrachtungsfläche werden auf eine Betrachtungslinie gebündelt, indem den Enden 19, 20 eine Zylinderlinse 21 nachgeschaltet ist, der wiederum in geeignetem Abstand $d$ eine Zeilenkamera 22 als Detektionseinrichtung nachgeordnet ist.

Die räumliche Intensitätsverteilung des Lichts längs der Achse der Zeilenkamera 22 ergibt sich dabei wie folgt:

$$I_M = I_P + I_R + 2 \cdot \gamma \cdot \sqrt{I_P \cdot I_R} \cdot \cos(2 \cdot \pi \cdot x)$$

wobei $I_P$ die Intensität des Lichts im Probenzweig, $I_R$ die Intensität des Lichts im Referenzzweig, $x$ der Abstand zu der zwischen den Enden 19 und 20 liegenden Mittellinie 23 und $y$ die Kohärenzfunktion des Lichtes darstellt.

Um die sich ergebenden Intensitätsunterschiede zuverlässig erfassen zu können, ist die Zeilenkamera 22, die als MOS-Zeilensensor ausgebildet ist, hinsichtlich Abstand und Anzahl der Einzelsensoren 24 so aufgebaut, dass der Abstand der Mittelpunkte der Sensoren 24 benachbarter Sensoren kleiner als ein Drittel der mittleren Wellenlänge des von der Lichtquelle 1 ausgehenden Lichtes ist.

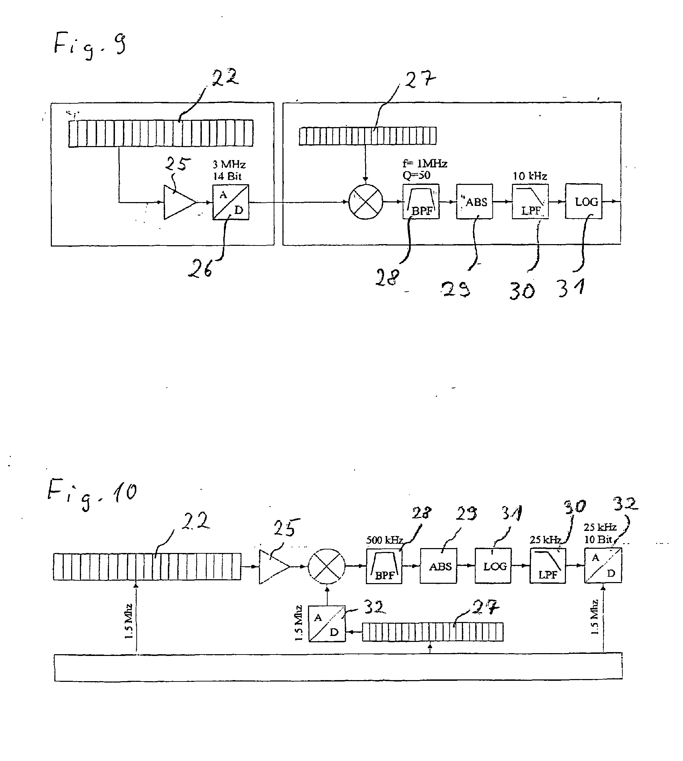

Die anhand von Fig. 2 dargestellte Intensitätsverteilung ergibt sich bei gleicher Laufzeitverteilung des Lichtes im Proben- und im Referenzzweig, d. h. bei gleicher Länge. Die Länge des Probenzweigs ist dabei von der Oberfläche der Probe im abgetasteten Punkt abhängig. Längenänderungen ergeben sich somit als Verschiebung der einhüllenden Gaußkurve in Fig. 2 nach links oder rechts vom Nullpunkt, wobei die Verschiebung ein direktes Maß für die Laufzeitverteilung im Referenz- und Probenzweig und somit für die Längenänderung des Probenzweigs gegenüber dem Referenzzweig in Abhängigkeit der mittleren Wellenlänge des eingesetzten Lichtes ist. Die Verarbeitung des von der Zeilenkamera 22 ausgehenden elektrischen Signals ist anhand der Figuren 9 und 10 dargestellt, wobei Fig. 9 eine Auswerteeinrichtung mit im Wesentlichen digitaler Signalverarbeitung und Fig. 10 eine solche mit analoger Signalverarbeitung darstellt. Die aus dem Zeilensensor 22 ausgelesenen Daten werden zunächst mittels eines Verstärkers 25 verstärkt und in Spannungswerte umgewandelt. Dem Verstärker 25 nachgeschaltet ist ein Analog-Digital-Wandler 26. Für eine Datenrate, die in etwa der entspricht, die auch mit zeitaufgelöster OCT erreichbar ist, kann z. B. ein 3-MHZ-Wandler eingesetzt werden. Die am Ausgang des Analog-Digital-Wandlers 26 aufbereiteten Daten können digital weiterverarbeitet werden, wie dies auch bei zeitaufgelösten OCT-Geräten an sich bekannt ist. Zunächst werden die Daten von systematischen Fehlern bereinigt, insbesondere den sich durch unterschiedliche Pixelempfindlichkeit ergebenden. Hierzu werden die einzelnen Messwerte jedes Sensors 24 der Sensorzeile 22 mit vorab ermittelten und in einem Speicher 27 abgelegten Korrekturfaktoren verknüpft, dann in einem Bandpass 28 gefiltert, um störende Rauschanteile zu minimieren. Danach wird das Signal demoduliert, indem es zunächst einem Gleichrichter 29, dann einem Tiefpassfilter 30 zugeführt und schließlich logarithmiert wird, um die Darstellung über mehrere Größenordnungen zu ermöglichen.

Wenn die aus der Sensorzeile 22 ausgelesenen Daten wie vorbeschrieben direkt digitalisiert werden, muss das mit einer Digitalisierungsrate erfolgen, die etwa der doppelten Trägerfrequenz entspricht. Außerdem ist in diesem Fall eine Digitalisierungstiefe von etwa 14 Bit erforderlich.

Insofern günstiger ist es, die gewonnenen Messdaten zunächst analog aufzubereiten, um damit die Anforderungen an den A/D-Wandler zu minimieren. Dazu werden die auf dem Bildsensor vorliegenden räumlichen Informationen wieder in zeitkontinuierliche zurückverwandelt, indem alle Sensoren 24 des Zeilensensors 22 mit einer bestimmten Frequenz ausgelesen werden. Ein so gewonnenes Signal kann dann mittels eines Bandpasses gefiltert, gleichgerichtet, logarithmiert und geglättet werden, wie es auch bei der heute üblichen, zeitaufgelösten Standard-OCT üblich ist. Zur Digitalisierung des so gewonnenen Signals ist dann ein 8-Bit-Wandler ausreichend, der mit 5 % der Trägerfrequenz getaktet wird.

Ein Problem dabei ist allerdings, dass die Empfindlichkeitsunterschiede der einzelnen Sensoren 24 nicht mehr numerisch entfernt werden können. Die entsprechenden Kalibrierungswerte können jedoch digitalisiert in einem Rom-Baustein 27 gespeichert werden, mittels eines Digital/Analogwandlers 32 in analoge Signale zurückverwandelt und mit den jeweiligen Messwerten aus dem zugehörigen Bildsensor 24 multipliziert werden. Dabei ist eine Wandelgenauigkeit ausreichend, die dem Kehrwert aus der Unformitätsschwankung multipliziert mit der notwendigen Wandlerauflösung im Fall der direkten Digitalisierung entspricht.

Die vorstehenden Beschreibungen kennzeichnen den grundsätzlichen Aufbau der Vorrichtung. Es versteht sich, dass je nach Anwendungszweck die Einzelkomponenten entsprechend zu variieren oder auszuwählen sind. Alle vorbeschriebenen Ausführungen weisen den großen Vorteil auf, dass das Licht vom Referenz- und Probenzweig im Bereich des Lichtwellenleiters 10 gemeinsam geführt ist, so dass hier ggf. auch weite Entfernungen überbrückt werden können, ohne Nachteile hinsichtlich der Langzeitstabilität befürchten zu müssen. Die Ausführungsvariante gemäß Fig. 8 ist aufgrund des eingesetzten Zirkulators 17 zwar vom Bauaufwand höher als die anderen, weist dafür jedoch eine deutlich höhere Lichtausbeute auf, wodurch die Dynamik erhöht wird.

Wenn beispielsweise mit einem OCT-Gerät des vorbeschriebenen Aufbaus ein Tiefenmessbereich der Probe von 15 µm erfasst werden soll, so genügt ein Messbereich von 70 µm in der Regel, um praktikable Messungen durchführen zu können. Solche Messtiefen sind beispielsweise zur Vermessung galvanisch erzeugter Strukturen von Halbleitern erforderlich. Wenn als Lichtquelle eine Superlumineszenzdiode mit einer mittleren Wellenlänge von 830 nm eingesetzt wird, so ist bei einem Abstand der einzelnen Bildpunkte des Sensors von einem Drittel der Wellenlänge beispielsweise ein CMOS-Zeilensensor mit 512 Elementen als brauchbar, bei denen jede fotoempfindliche Zelle beispielsweise ein Größe von 25 x 2.500 µm aufweist. Wenn zwischen den Ausgängen 19 und 20 der Lichtwellenleiter, die das aus dem Proben- und Referenzzweig zurückkehrende Licht führen, ein Abstand von 2,5 mm gewählt wird, muss die Betrachtungsebene B zwar 224 mm von den Faserenden entfernt platziert werden, damit auf jede Detektorzelle eine drittel Wellenlänge entfällt. Bei einem derartigen Abstand und einer Apertur der verwendeten Lichtwellenleiter von 0,11 fällt die Intensität von der Mitte des Bildsensors bis zu seinem Rand hin auf ca. 80 % der Maximalintensität ab. Damit nicht ein wesentlicher Teil der Lichtleistung oder ober- oder unterhalb des Bildsensor vorbeiläuft, kann eine Zylinderlinse mit einer Brennweite von 10 mm in einem Abstand von 10 mm vor den Faserenden platziert werden. Unter diesen Bedingunger wird das Licht aus den Fasern zu einem ca. 2 mm hohen Bündel kollimiert, so dass das gesamte Licht auf die 2,5 mm hohen Sensorelemente gelangt. Die Auswertung kann beispielsweise mit einer Digitalisierungsrate von 100 kHz erfolgen, so dass die 512 Elemente des Bildsensors 200 mal pro Sekunde ausgelesen werden. Es könnten also theoretisch 200 Punkte der Probe pro Sekunde tiefenmäßig vermessen werden, wobei für die Verschiebung der Probenzweigoptik von Punkt zu Punkt noch eine gewisse Zeit kalkuliert werden kann, so dass diese theoretische Abtastgeschwindigkeit nicht vollständig ausgenutzt werden kann.

Bezugszeichenliste

1 -   Lichtquelle

2 -   Lichtwellenleiter

3 -   Strahlteiler, Faserkoppler

5 -   Lichtwellenleiter

7 -   Optik

8 -   Probe

9 -   Lichtwellenleiter (Referenzzweig)

10 -   Lichtwellenleiter

11 -   Spiegel

12 -   zweiter Strahlteiler

13 -   Lichtwellenleiter

14 -   Lichtwellenleiter

15 -   halbdurchlässiger Spiegel

17 -   Zirkulator

19 -   Ende eines Lichtwellenleiters

20 -   Ende eines Lichtwellenleiters

21 -   Zylinderlinse

22 -   Sensorzeile

23 -   Mittellinie

24 -   Sensor

25 -   Verstärker

26 -   A/D-Wandler

27 -   Speicher

28 -   Bandpass

29 -   Gleichrichter

30 - Tiefpass

31 - logarithmierende Baueinheit

32 - D/A-Wandler

B - Betrachtungsebene

P - Punkt

D - Abstand zwischen Betrachtungsebene und Lichtquelle

d - Abstand der Lichtquellen

X - Abstand des Punkts zur Mittellinie

IV - Anordnung zur Detektion

**Patentansprüche**

1. Interferometrische Anordnung zur Ermittlung der Laufzeitverteilung des Lichts in einer Probe, mit einer breitbandigen Lichtquelle (1) mit kurzer Kohärenzlänge, wobei das Licht der Lichtquelle (1) durch einen Lichtwellenleiter (2) einem ersten Strahlteiler (3) zugeführt wird, der das Licht in einen Probenzweig und einen Referenzzweig anteilig leitet, wobei der Referenzzweig eine dem Probenzweig angepasste optische Laufstrecke aufweist; und wobei im Probenzweig das Licht über einen Lichtwellenleiter (5) und eine Optik (7) auf die Probe (8) aufgebracht wird, **dadurch gekennzeichnet, dass** sowohl von der Probe (8) reflektiertes Licht als auch Licht aus dem Referenzzweig wiederum zum ersten Strahlteiler (3) gelangt und über einen einzigen gemeinsamen Lichtwellenleiter (10) zu einem zweiten Strahlteiler (12) geführt wird, wobei der zweite Strahlteiler (12) das Licht in zwei Anteile aufspaltet, die in einer Anordnung (IV) räumlich überlagert werden, und sich **dadurch** einstellende Interferenzerscheinungen von einer optischen Detektionseinrichtung mit nachgeschalteter Auswerteeinrichtung (25-32) erfasst und zur Bestimmung der Laufzeitverteilung des Lichts in der Probe (8) verwendet werden.

2. Anordnung nach Anspruch 1, **dadurch gekennzeichnet, dass** der erste Strahlteiler (3), vorzugsweise ein Faserkoppler (3), das Licht in den Probenzweig und in den Referenzzweig leitet, wo es jeweils reflektiert und zurück in den ersten Strahlteiler (3) gelangt, von wo aus es über den gemeinsamen Lichtwellenleiter (10) zu dem der Detektionseinrichtung (22) zugeordneten zweiten Strahlteiler (12) geführt ist.

3. Anordnung nach einem der vorhergehenden Ansprüche, **dadurch gekennzeichnet, dass** das Licht im Referenzzweig vom ersten Strahlteiler (3) mittels eines Lichtwellenleiters (9) einer Reflexionsvorrichtung (11), vorzugsweise einem Spiegel (11), zugeführt ist und über denselben Lichtwellenleiter (9) wieder in den ersten Strahlteiler (3) geführt ist, wo es mit dem von der Probe (8) reflektierten Licht des Probenzweigs überlagert wird.

4. Anordnung nach einem der vorhergehenden Ansprüche, **dadurch gekennzeichnet, dass** das Licht im Proben- und Referenzzweig über einen gemeinsamen Lichtwellenleiter (5) zwischen dem ersten Strahlteiler (3) und der Probe (8) bzw. einer Reflexionsfläche geführt ist.

5. Anordnung nach einem der vorhergehenden Ansprüche, **dadurch gekennzeichnet, dass** die Reflexionsfläche durch einen teildurchlässigen Spiegel (15) zwischen Probe (8) und Lichtwellenleiter (5) gebildet ist.

6. Anordnung nach einem der vorhergehenden Ansprüche, **dadurch gekennzeichnet, dass** die Reflexionsfläche durch das freie Ende des zur Probe (8) gerichteten Lichtwellenleiters (5) gebildet ist.

7. Anordnung nach einem der vorhergehenden Ansprüche, **dadurch gekennzeichnet, dass** an Stelle des ersten Strahlteilers (3) ein Zirkulator vorgesehen ist.

8. Anordnung nach einem der vorhergehenden Ansprüche, **dadurch gekennzeichnet, dass** im Referenz- und/oder Probenzweig Mittel zum Verändern der Laufstrecke vorgesehen sind.

9. Anordnung nach einem der vorhergehenden Ansprüche, **dadurch gekennzeichnet, dass** Mittel zum Verringern der Lichtintensität im Referenzzweig vorgesehen sind.

10. Anordnung nach einem der vorhergehenden Ansprüche, **dadurch gekennzeichnet, dass** die Detektionseinheit (22) eine Reihe von Detektionszellen aufweist, deren Mittelpunktabstand einem Drittel der mittleren Wellenlänge des Lichts entspricht.

11. Anordnung nach einem der vorhergehenden Ansprüche, **dadurch gekennzeichnet, dass** die Auswerteeinrichtung einen analog arbeitenden Teil aufweist, der das elektrische Signal der Detektionseinrichtung (22) innerhalb der Auswerteeinrichtung (25 - 32) um einen vorgegebenen Wert reduziert, und
weiter ein Analog/Digitalwandler (32) vorgesehen ist, mit dem das reduzierte Signal digitalisiert wird, und dass die weitere Signalverarbeitung digital erfolgt.


**Claims**

1. Interferometric arrangement for determining the transit time distribution of light in a sample, having a broad-band light source (1) with a short coherence length, the light of the light source (1) being supplied via a light waveguide (2) to a first beam splitter (3) that guides the light proportionately into a sample branch and a reference branch, the reference branch having an optical transit path matched to the sample branch; and
the light being applied in the sample branch by means of a light waveguide (5) and an optics (7) to the sample (8),
**characterized in that**
both light reflected from the sample (8) and also light from the reference branch again returns to the first beam splitter (3) and is guided by means of a single common light waveguide (10) to a second beam splitter (12),
the second beam splitter (12) splitting the light into two parts that are superimposed spatially in an arrangement (IV) and interference effects caused thereby being detected by an optical detection device with a downstream evaluating device (32-35) and being used to determine the transit time distribution of the light in the sample (8).

2. Arrangement according to Claim 1, **characterized in that** the first beam splitter (3), preferably a fibre coupler (3), passes the light into the sample branch and into the reference branch, where it is in each case reflected and passes back into the first beam splitter (3), from where it is guided by means of the common light waveguide (10) to the second beam splitter (12) associated with the detector (22).

3. Arrangement according to one of the preceding claims, **characterized in that** the light in the reference branch is supplied by the first beam splitter (3) by means of a light waveguide (9) to a reflecting device (11), preferably a mirror (11), and by means of the same light waveguide (9) is guided again into the first beam splitter (3), where it is superimposed with the sample branch light reflected by the sample (8).

4. Arrangement according to one of the preceding claims, **characterized in that** the light in the sample and reference branches is guided by means of a common light waveguide (5) between the first beam splitter (3) and the sample (8) or a reflecting surface.

5. Arrangement according to one of the preceding claims, **characterized in that** the reflecting surface is formed by a partly transmitting mirror (15) between the sample (8) and the light waveguide (5).

6. Arrangement according to one of the preceding claims, **characterized in that** the reflecting surface is formed by the free end of the light waveguide (5) directed towards the sample (8).

7. Arrangement according to one of the preceding claims, **characterized in that** a circulator is provided in place of the first beam splitter (3).

8. Arrangement according to one of the preceding claims, **characterized in that** means for varying the transit path are provided in the reference and/or sample branch.

9. Arrangement according to one of the preceding claims, **characterized in that** means for reducing the light intensity are provided in the reference branch.

10. Arrangement according to one of the preceding claims, **characterized in that** the detector (22) has a plurality of detection cells, whose centre spacing corresponds to a third of the median wavelength of the light.

11. Arrangement according to one of the preceding claims, **characterized in that** the evaluating device has a part operating in analog manner, which reduces the electric signal of the detector (22) within the evaluating device (25-32) by a predetermined value,
and that further an analog-digital converter (32) is provided that digitizes the reduced signal and that the further signal processing takes place in digital form.

**Revendications**

1. Ensemble interférométrique destiné à déterminer la distribution du temps de propagation de la lumière dans un échantillon, comprenant une source de lumière (1) à large bande et à courte longueur de cohérence, la lumière de ladite source de lumière (1) étant amenée via un guide d'ondes lumineuses (2) à un premier diviseur de faisceau (3) qui dirige la lumière proportionnellement dans une branche d'échantillon et dans une branche de référence, ladite branche de référence présentant un trajet optique adapté à la branche d'échantillon, et, dans ladite branche d'échantillon, la lumière étant appliquée à l'échantillon (8) par l'intermédiaire d'un guide d'ondes lumineuses (5) et d'une optique (7), **caractérisé par le fait qu'**aussi bien de la lumière réfléchie par ledit échantillon (8) que de la lumière provenant de la branche de référence atteint à nouveau ledit premier diviseur de faisceau (3) et est menée via un seul guide commun d'ondes lumineuses (10) vers un second diviseur de faisceau (12), ledit second diviseur de faisceau (12) divisant la lumière en deux parties qui sont superposées l'une à l'autre dans l'espace dans une disposition (IV), et des phénomènes d'interférence ainsi produits étant détectés par l'intermédiaire d'un dispositif de détection optique comprenant un dispositif d'évaluation (25-32) monté à la suite et étant utilisés pour déterminer la distribution du temps de propagation de la lumière dans l'échantillon (8).

2. Ensemble selon la revendication 1, **caractérisé par le fait que** ledit premier diviseur de faisceau (3), de préférence un coupleur de fibres (3), dirige la lumière dans la branche d'échantillon et dans la branche de référence où elle est respectivement réfléchie et revient au premier diviseur de faisceau (3) d'où elle est guidée via ledit guide commun d'ondes lumineuses (10) au second diviseur de faisceau (12) associé au dispositif de détection (22).

3. Ensemble selon l'une quelconque des revendications précédentes, **caractérisé par le fait que** la lumière dans la branche de référence est amenée depuis le premier diviseur de faisceau (3), au moyen d'un guide d'ondes lumineuses (9), à un dispositif de réflexion (11), de préférence à un miroir (11), et est redirigée via le même guide d'ondes lumineuses (9) dans le premier diviseur de faisceau (3) où elle est superposée à la lumière de la branche d'échantillon qui est réfléchie par l'échantillon (8).

4. Ensemble selon l'une quelconque des revendications précédentes, **caractérisé par le fait que** la lumière dans les branches d'échantillon et de référence est guidée via un guide commun d'ondes lumineuses (5) entre le premier diviseur de faisceau (3) et ledit échantillon (8) ou bien une surface de réflexion.

5. Ensemble selon l'une quelconque des revendications précédentes, **caractérisé par le fait que** la surface de réflexion est constituée par un miroir partiellement transparent (15) entre ledit échantillon (8) et ledit guide d'ondes lumineuses (5).

6. Ensemble selon l'une quelconque des revendications précédentes, **caractérisé par le fait que** la surface de réflexion est constituée par l'extrémité libre du guide d'ondes lumineuses (5) dirigé vers l'échantillon (8).

7. Ensemble selon l'une quelconque des revendications précédentes, **caractérisé par le fait qu'**un circulateur est prévu au lieu du premier diviseur de faisceau (3).

8. Ensemble selon l'une quelconque des revendications précédentes, **caractérisé par le fait que** des moyens de variation du trajet sont prévus dans la branche de référence et/ou d'échantillon.

9. Ensemble selon l'une quelconque des revendications précédentes, **caractérisé par le fait que** des moyens de réduction de l'intensité lumineuse sont prévus dans la branche de référence.

10. Ensemble selon l'une quelconque des revendications précédentes, **caractérisé par le fait que** ladite unité de détection (22) comprend une série de cellules de détection dont l'écart des centres correspond à un tiers de la longueur d'onde moyenne de la lumière.

11. Ensemble selon l'une quelconque des revendications précédentes, **caractérisé par le fait que** ledit dispositif d'évaluation comprend une partie travaillant de façon analogique qui réduit d'une valeur prédéterminée le signal du dispositif de détection (22) à l'intérieur du dispositif d'évaluation (25-32), et que, en outre, un convertisseur analogique-numérique (32) est prévu par lequel le signal réduit est numérisé, et que l'autre traitement du signal est réalisé de façon numérique.

Fig. 1

Fig. 2

Fig. 3

Fig. 4

## Fig. 5

## Fig. 6

EP 1 379 857 B1

Fig. 7

Fig. 8

16

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19929406 A1
- DE 19732619 C2

- WO 9219920 A1

**In der Beschreibung aufgeführte Nicht-Patentliteratur**

- **E. Lankenau et al.** An imaging system for Low Coherence Tomography. *OSA Trends in Optics and Photonics an Advances in Optical Imaging and Photon Migration,* 18. Marz 1996, vol. 2, 247-249